# EUROPEAN PATENT APPLICATION

(11) **EP 4 821 990 A1**
(43) Date of publication of application: **14.10.2026**
(21) Application number: 24900519.0
(22) Date of filing: 27.11.2024
(51) Int. Cl.: C09C 1/48, H01M 4/13, H01M 4/62

(54) **CARBON BLACK, AND METHOD FOR ASSESSING OR SELECTING CARBON BLACK**

(30) Priority: 06.12.2023 JP 2023206016
(71) Applicant: Denka Company Limited, Tokyo 103-8338 (JP)
(72) Inventor: ICHIKAWA, Joichiro, Tokyo 103-8338 (JP); SHIMIZU, Satoru, Tokyo 103-8338 (JP); HATANO, Hiroka, Tokyo 103-8338 (JP); OSUMI, Shinichiro, Tokyo 103-8338 (JP); FUKAZAWA, Motoharu, Tokyo 103-8338 (JP)
(74) Representative: Hoffmann Eitle
(86) International application number: PCT/JP2024/042027
(87) International publication number: WO 2025/121225

(57) **Abstract**

A carbon black including a plurality of aggregate particles, each of which is formed by aggregation of a plurality of primary particles, wherein, when the plurality of aggregate particles are classified based on the X value, the Y value, and the Z value, the proportion of the fourth aggregate particle having an X value of 0.588 or more, a Y value of less than 0.833, and a Z value of less than 0.77 is 41% or more. X=a/b...(i), Y=4πA/P²...(ii), Z=A/Ac...(iii) [wherein a represents the minimum Feret diameter (µm), b represents the maximum Feret diameter (µm), A represents the projected area (µm²), P represents the perimeter (µm), and Ac represents the area (µm²) inside an envelope line, in the measurement binary image from the image processing system.]

## Description

### TECHNICAL FIELD

The present disclosure relates to carbon black and a method for assessing or selecting carbon black.

### BACKGROUND

Carbon black has conventionally been used as a conductive material, etc., and the development of carbon black with various properties is currently being explored (for example, Patent Document 1).

### CITATION LIST

### PATENT LITERATURE

Patent Document 1: JP 2009-035598 A

### SUMMARY OF INVENTION

### TECHNICAL PROBLEM

In recent years, demand for secondary batteries has increased, highlighting the need for improvements to the properties of the conductive materials used in secondary batteries.

One objective of the present disclosure is to provide carbon black that is suitable as a conductive material for secondary batteries and that is capable of forming electrodes with lower resistance. Another objective of the present disclosure is to provide a method for evaluating or sorting carbon black suitable as a conductive material for secondary batteries.

### SOLUTION TO PROBLEM

The present disclosure, for example, relates to the following [1] to [10].
[1] Carbon black including a plurality of aggregate particles, each of the plurality of aggregate particles being formed by aggregation of a plurality of primary particles, wherein
   when the plurality of aggregate particles are classified into: a first aggregate particle having an X value determined by the following equation (i) of less than 0.588; a second aggregate particle having the X value of 0.588 or more and a Y value determined by the following equation (ii) of 0.833 or more; a third aggregate particle having the X value of 0.588 or more, the Y value of less than 0.833, and a Z value determined by the following equation (iii) of 0.77 or more; and a fourth aggregate particle having the X value of 0.588 or more, the Y value of less than 0.833, and the Z value of less than 0.77, the proportion of the fourth aggregate particle relative to the total number of the first aggregate particle, the second aggregate particle, the third aggregate particle, and the fourth aggregate particle is 41% or more. $X = a / b$ (i) $Y = 4 π A / {P}^{2}$ (ii) $Z = A / Ac$ (iii)
   [wherein a represents a minimum Feret diameter (µm) of the aggregate particle, b represents a maximum Feret diameter (µm) of the aggregate particle, A represents a projected area (µm²) of the aggregate particle, P represents a perimeter (µm) of the aggregate particle, and Ac represents an area (µm²) inside an envelope line of the aggregate particle, in a measurement binary image generated by an image processing system,
   wherein the image processing system comprises at least one processor, and wherein the at least one processor:
      obtains a grayscale first original image depicting the plurality of aggregate particles captured by a scanning electron microscope;
      performs a first binarization processing on the first original image based on a Gaussian mixture model to generate a first binary image in which a foreground region formed from the plurality of aggregate particles is distinguished from a background region other than the foreground region;
      generates, from the first binary image, a partial image that is a part of the first binary image and that depicts a subset of the plurality of aggregate particles;
      converts a pixel value of each pixel in the partial image to a pixel value of each pixel in the first original image corresponding to the each pixel in the partial image to generate a second original image; and
      performs a second binarization processing on the second original image based on the Gaussian mixture model to generate the measurement binary image in which a foreground region formed from the subset of aggregate particles is distinguished from a background region other than the foreground region.
[2] The carbon black according to [1], wherein the proportion of the third aggregate particle relative to the total number of the first aggregate particle, the second aggregate particle, the third aggregate particle, and the fourth aggregate particle is 17% or less.
[3] The carbon black according to [1] or [2], wherein the carbon black has an oil absorption of 150 mL/100g or more and 400 mL/100g or less.
[4] The carbon black according to any one of [1] to [3], wherein the carbon black has a BET specific surface area of 35 m²/g or more and 400 m²/g or less.
[5] An electrode composition comprising the carbon black according to any one of [1] to [4] and an active material capable of absorbing and releasing lithium ions.
[6] An electrode comprising the electrode composition according to [5].
[7] A secondary battery comprising the electrode according to [6].
[8] A method of evaluating or sorting carbon black including a plurality of aggregate particles, each of the plurality of aggregate particles being formed by aggregation of a plurality of primary particles, the method comprising the steps of:
   obtaining a measurement binary image generated by an image processing system;
   determining, from the measurement binary image, a proportion of a fourth aggregate particle relative to a total number of a first aggregate particle, a second aggregate particle, a third aggregate particle, and the fourth aggregate particle, when
   the plurality of aggregate particles are classified into: the first aggregate particle having an X value determined by the following equation (i) of less than 0.588; the second aggregate particle having the X value of 0.588 or more and a Y value determined by the following equation (ii) of 0.833 or more; the third aggregate particle having the X value of 0.588 or more, the Y value of less than 0.833, and a Z value determined by the following equation (iii) of 0.77 or more; and the fourth aggregate particle having the X value of 0.588 or more, the Y value of less than 0.833, and the Z value of less than 0.77; and
   evaluating or sorting the carbon black based on the proportion, wherein the image processing system comprises at least one processor, and wherein the at least one processor:
      obtains a first original image depicting the plurality of aggregate particles;
      performs a first binarization processing on the first original image to generate a first binary image in which a foreground region formed from the plurality of aggregate particles is distinguished from a background region other than the foreground region;
      based on the first original image and the first binary image, generates a second original image depicting a subset of the plurality of aggregate particles, in which a pixel value of each pixel in the second original image is a pixel value of each pixel in the first original image corresponding to the each pixel in the second original image; and
      performs a second binarization processing on the second original image to generate the measurement binary image in which a foreground region formed from the subset of aggregate particles is distinguished from a background region other than the foreground region. $X = a / b$ (i) $Y = 4 π A / {P}^{2}$ (ii) $Z = A / Ac$ (iii)
      [wherein a represents a minimum Feret diameter (µm) of the aggregate particle, b represents a maximum Feret diameter (µm) of the aggregate particle, A represents a projected area (µm²) of the aggregate particle, P represents a perimeter (µm) of the aggregate particle, and Ac represents an area (µm²) inside an envelope line of the aggregate particle, in the measurement binary image generated by the image processing system].
[9] The method according to [8], wherein
   the first original image is a grayscale image, and wherein the at least one processor:
   performs the first binarization processing based on a Gaussian mixture model; and
   performs a second binarization processing based on the Gaussian mixture model.
[10] The method according to [8] or [9], wherein
   the at least one processor:
   generates, from the first binary image, a partial image that is a part of the first binary image and that depicts the subset of the plurality of aggregate particles; and
   converts a pixel value of each pixel in the partial image to a pixel value of each pixel in the first original image corresponding to the each pixel in the partial image to generate the second original image.
[11] The method according to any one of [8] to [10], wherein the first original image is an image obtained by imaging with a scanning electron microscope.

### EFFECTS OF INVENTION

According to the present disclosure, carbon black that is suitable as a conductive material for secondary batteries and that is capable of forming electrodes with lower resistance is provided. Further, according to the present disclosure, a method for evaluating or sorting carbon black suitable as a conductive material for secondary batteries is provided.

### BRIEF DESCRIPTION OF DRAWINGS

Fig. 1 shows an example of a functional configuration of an image processing system.
Fig. 2 shows a general hardware configuration of a computer capable of functioning as an image processing system.
Fig. 3 shows a flowchart illustrating an example of processing performed in an image processing system.
Fig. 4 shows an example of a first original image.
Fig. 5 shows an example of a histogram of pixel values in a first original image.
Fig. 6 shows an example of a first binarization processing.
Fig. 7 is a flowchart illustrating an example of a method for generating a second original image.
Fig. 8 shows an example of a method for generating a second original image.

### DESCRIPTION OF EMBODIMENTS

Hereinafter, embodiments of the present disclosure will be explained in detail with reference to the attached drawings. In the description of drawings, the same or equivalent elements will be designated by the same reference numbers, and redundant descriptions will be omitted.

The method according to the present disclosure is a method for evaluating or sorting carbon black based on a measurement binary image generated by the image processing system described below. Carbon black includes a plurality of aggregate particles, each formed by aggregation of a plurality of primary particles. The method according to the present disclosure may be a method including classifying, from the measurement binary image, aggregate particles based on an X value determined by equation (i), a Y value determined by equation (ii), and a Z value determined by equation (iii) to evaluate or sort carbon black based on a proportion of the classified aggregate particles. $X = a / b$ (i) $Y = 4 π A / {P}^{2}$ (ii) $Z = A / Ac$ (iii) [wherein a represents a minimum Feret diameter (µm) of an aggregate particle, b represents a maximum Feret diameter (µm) of the aggregate particle, A represents a projected area (µm²) of the aggregate particle, P represents a perimeter (µm) of the aggregate particle, and Ac represents an area (µm²) inside an envelope line of the aggregate particle, in the measurement binary image generated by the image processing system.]

The aggregate particles may be classified into: a first aggregate particle having an X value of less than 0.588; a second aggregate particle having an X value of 0.588 or more and a Y value of 0.833 or more; a third aggregate particle having an X value of 0.588 or more, a Y value of less than 0.833, and a Z value of 0.77 or more; and a fourth aggregate particle having an X value of 0.588 or more, a Y value of less than 0.833, and a Z value of less than 0.77. Here, the method according to the present disclosure may be a method including determining the proportion of the fourth aggregate particle relative to the total number of the first aggregate particle, the second aggregate particle, the third aggregate particle, and the fourth aggregate particle, to evaluate or sort carbon black based on the proportion. When the proportion of the fourth aggregate particle is high, an electrode having a lower resistance value can be more easily obtained. Accordingly, by sorting carbon black based on the proportion of the fourth aggregates, carbon black capable of forming an electrode with a lower resistance value can be easily sorted. Further, by evaluating carbon black based on the proportion of the fourth aggregate, a resistance of an electrode formed from the carbon black can be predicted, and whether or not the carbon black is useful as a conductive material for secondary batteries can be easily evaluated.

The first aggregate particle is an aggregate particle having an X value of less than 0.588 in equation (i). Here, the X value indicates an aspect ratio of the aggregate particle. The greater the difference between a major axis and a minor axis, the smaller the X value becomes. Since the first aggregate particle has an X value of less than 0.588, it can be regarded as an aggregate particle having a shape close to linear.

The second aggregate particle is an aggregate particle having an X value of 0.588 or more and a Y value of 0.833 or more. Here, the Y value indicates the complexity of an aggregate particle, and it can be said that the closer the Y value is to 1, the closer the shape is to a true circle. Since the second aggregate particle has an X value of 0.588 or more and a Y value of 0.833 or more, it can be regarded as an aggregate particle having a shape close to spherical.

The third aggregate particle is an aggregate particle having an X value of 0.588 or more, a Y value of less than 0.833, and a Z value of 0.77 or more. Here, the Z value indicates a proportion of a projected area of an aggregate particle relative to an area inside an envelope line when the envelope line is wrapped around the aggregate particle, and it can be said that the larger the Z value is, the fewer branches the aggregate particle has. Since the third aggregate particle is an aggregate particle having an X value of 0.588 or more, a Y value of less than 0.833, and a Z value of 0.77 or more, it can be regarded as an aggregate particle having a shape close to elliptical.

The fourth aggregate particle is an aggregate particle having an X value of 0.588 or more, a Y value of less than 0.833, and a Z value of less than 0.77. Here, the Z value indicates a proportion of a projected area of an aggregate particle relative to an area inside an envelope line when the envelope line is wrapped around the aggregate particle, and it can be said that the smaller the Z value is, the more branched the aggregate particle is. Since the fourth aggregate particle is an aggregate particle having an X value of 0.588 or more, a Y value of less than 0.833, and a Z value of less than 0.77, it can be regarded as an aggregate particle having more branches.

By classifying carbon black based on a measurement binary image generated by the image processing system described below, the classification clearly reflects the properties of the carbon black. That is, in the method according to the present disclosure, aggregate particles are classified based on an X value, a Y value, and a Z value derived from the measurement binary image generated by the image processing system described below to sort carbon black in accordance with the proportion of the classified aggregate particles, thereby carbon black having the desired properties can be easily sorted. Furthermore, evaluation of carbon black in accordance with the proportion of the classified aggregate particles facilitates evaluation of carbon black.

The shape of aggregate particles in carbon black varies significantly depending on factors such as differences in the collision frequency of primary particles, which are caused by differences in the thermal history during synthesis (such as thermal history due to the thermal decomposition and combustion reactions of fuel oil, the thermal decomposition and combustion reactions of raw materials, and rapid cooling and reaction termination by a cooling medium).

In a preferred embodiment of carbon black, the proportion of the fourth aggregate particle relative to the total number of the first, second, third, and fourth aggregate particles (N₄/(N₁+N₂+N₃+N₄)) is 41% or more, preferably 43% or more, more preferably 45% or more, and further preferably 47% or more.

For example, the proportion (N₄/(N₁+N₂+N₃+N₄)) may be 60% or less, 58% or less, 56% or less, or 54% or less. This tends to make it easier to obtain electrodes with lower resistance values.
That is, the proportion (N₄/(N₁+N₂+N₃+N₄)) may be, for example, 41% to 60%, 41% to 58%, 41% to 56%, 41% to 54%, 43% to 60%, 43% to 58%, 43% to 56%, 43% to 54%, 45% to 60%, 45% to 58%, 45% to 56%, 45% to 54%, 47% to 60%, 47% to 58%, 47% to 56%, or 47% to 54%.

The proportion of the first aggregate particle relative to the total number of the first aggregate particle, the second aggregate particle, the third aggregate particle, and the fourth aggregate particle (N₁/(N₁+N₂+N₃+N₄)) may be, for example, 30% or more, 33% or more, 36% or more, or 39% or more. This tends to make it easier to obtain electrodes with lower resistance values. Further, the proportion (N₁/(N₁+N₂+N₃+N₄)) may be, for example, 54% or less, 52% or less, 50% or less, or 48% or less. This tends to make it easier to obtain electrodes with lower resistance values.
That is, the proportion (N₁/(N₁+N₂+N₃+N₄)) may be, for example, 30% to 54%, 30% to 52%, 30% to 50%, 30% to 48%, 33% to 54%, 33% to 52%, 33% to 50%, 33% to 48%, 36% to 54%, 36% to 52%, 36% to 50%, 36% to 48%, 39% to 54%, 39% to 52%, 39% to 50%, or 39% to 48%.

The proportion of the second aggregate particle relative to the total number of the first aggregate particle, the second aggregate particle, the third aggregate particle, and the fourth aggregate particle (N₂/(N₁+N₂+N₃+N₄)) may be, for example, 2% or less, 1% or less, 0.5% or less, 0.1% or less, or 0%. This tends to make it easier to obtain electrodes with lower resistance values.

The proportion of the third aggregate particle relative to the total number of the first aggregate particle, the second aggregate particle, the third aggregate particle, and the fourth aggregate particle (N₃/(N₁+N₂+N₃+N₄)) may be, for example, 0.1% or more, 0.5% or more, 1% or more, or 2% or more. This tends to make it easier to obtain electrodes with lower resistance values. Further, the proportion (N₃/(N₁+N₂+N₃+N₄)) may be, for example, 17% or less, 14% or less, 11% or less, or 8% or less. This tends to make it easier to obtain electrodes with lower resistance values.
That is, the proportion (N₃/(N₁+N₂+N₃+N₄)) may be, for example, 0.1% to 17%, 0.1% to 14%, 0.1% to 11%, 0.1% to 8%, 0.5% to 17%, 0.5% to 14%, 0.5% to 11%, 0.5% to 8%, 1% to 17%, 1% to 14%, 1% to 11%, 1% to 8%, 2% to 17%, 2% to 14%, 2% to 11%, or 2% to 8%.

In the method according to the present disclosure, carbon black may be evaluated or sorted based on the numerical ranges above.

The carbon black in the present disclosure is preferably acetylene black.

The oil absorption of the carbon black may be, for example, 150 mL/100g or more, 180 mL/100g or more, 210 mL/100g or more, or 240 mL/100g or more. This tends to make it easier to obtain electrodes with lower resistance values. Further, the oil absorption of the carbon black may be, for example, 400 mL/100g or less, 380 mL/100g or less, 350 mL/100g or less, or 320 mL/100g or less. This tends to make it easier to obtain electrodes with lower resistance values.
That is, the oil absorption of the carbon black may be, for example, 150 to 400 mL/100g, 150 to 380 mL/100g, 150 to 350 mL/100g, 150 to 320 mL/100g, 180 to 400 mL/100g, 180 to 380 mL/100g, 180 to 350 mL/100g, 180 to 320 mL/100g, 210 to 400 mL/100g, 210 to 380 mL/100g, 210 to 350 mL/100g, 210 to 320 mL/100g, 240 to 400 mL/100g, 240 to 380 mL/100g, 240 to 350 mL/100g, or 240 to 320 mL/100g.

The oil absorption of carbon black indicates a value obtained by converting, by the following equation (a), a value measured using DBP (dibutyl phthalate) as an oil according to the method described in Method B of JIS K 6221 into a value equivalent to JIS K 6217-4:2008. $DBP Absorption = \left(A-10.974\right) / 0.7833$ (a) [wherein A represents the DBP absorption value measured using the method described in Method B of JIS K 6221.]

The BET specific surface area of carbon black may be, for example, 35 m²/g or more, 60 m²/g or more, 90 m²/g or more, or 120 m²/g or more. This tends to make it easier to obtain electrodes with lower resistance values. Further, the BET specific surface area of carbon black may be, for example, 400 m²/g or less, 360 m²/g or less, 320 m²/g or less, or 280 m²/g or less. This tends to make it easier to obtain electrodes with lower resistance values.
That is, the BET specific surface area of carbon black may be, for example, 35 to 400 m²/g, 35 to 360 m²/g, 35 to 320 m²/g, 35 to 280 m²/g, 60 to 400 m²/g, 60 to 360 m²/g, 60 to 320 m²/g, 60 to 280 m²/g, 90 to 400 m²/g, 90 to 360 m²/g, 90 to 320 m²/g, 90 to 280 m²/g, 120 to 400 m²/g, 120 to 360 m²/g, 120 to 320 m²/g, or 120 to 280 m²/g.

The BET specific surface area of the carbon black is measured using Method B, the single-point nitrogen adsorption method, as described in JIS K 6217-2.

The primary particle size (average primary particle size) of the carbon black may be, for example, 15 nm or more, 17 nm or more, 19 nm or more, or 21 nm or more. This tends to make it easier to obtain electrodes with lower resistance values. Further, the primary particle size (average primary particle size) of the carbon black may be, for example, 55 nm or less, 50 nm or less, 45 nm or less, or 40 nm or less. This tends to make it easier to obtain electrodes with lower resistance values.
That is, the primary particle size(average primary particle size)of the carbon black may be, for example, 15 to 55 nm, 15 to 50 nm, 15 to 45 nm, 15 to 40 nm, 17 to 55 nm, 17 to 50 nm, 17 to 45 nm, 17 to 40 nm, 19 to 55 nm, 19 to 50 nm, 19 to 45 nm, 19 to 40 nm, 21 to 55 nm, 21 to 50 nm, 21 to 45 nm, or 12 to 40 nm.

The primary particle size (average primary particle size) of the carbon black may be evaluated by the image processing system described below.

In the present disclosure, an image processing system includes at least one processor. The at least one processor: (1) obtains a first original image depicting a plurality of aggregate particles; (2) performs a first binarization processing on the first original image to generate a first binary image in which a foreground region formed from a plurality of aggregate particles is distinguished from a background region other than the foreground region; (3) generates, based on the first original image and the first binary image, a second original image depicting a subset of the plurality of aggregate particles, in which a pixel value of each pixel in the second original image is a pixel value of each pixel in the first original image corresponding to the each pixel in the second original image; and (4) performs a second binarization processing on the second original image to generate a measurement binary image in which a foreground region formed from a subset of the aggregate particles is distinguished from a background region other than the foreground region. Using such an image processing system, carbon black can be efficiently evaluated or sorted based on the classification of aggregate particles.

In the present disclosure, at least one processor of an image processing system may: (1') obtain a grayscale first original image depicting a plurality of aggregate particles, captured by a scanning electron microscope; (2') perform, based on a Gaussian mixture model, a first binarization processing on the first original image to generate a first binary image in which a foreground region formed from a plurality of aggregate particles is distinguished from a background region other than the foreground region; (3-1') generate, from the first binary image, a partial image that is a part of the first binary image and that depicts a subset of the plurality of aggregate particles; (3-2') convert a pixel value of each pixel of the partial image to a pixel value of each pixel in the first original image corresponding to the each pixel in the partial image to generate a second original image; and (4') based on a Gaussian mixture model, perform a second binarization processing on the second original image to generate a measurement binary image in which a foreground region formed from a subset of aggregate particles is distinguished from a background region other than the foreground region. With such an image processing system, aggregate particles can be classified more accurately, enabling more efficient evaluation or sorting of carbon black based on the numerical ranges above.

Hereinafter, the image processing system of the present disclosure will be described in detail.

### [System Overview]

The image processing system according to the present disclosure is a computer system that performs image processing on an original image depicting aggregate particles. In one example, an image processed by the image processing system is used to evaluate the shape of aggregate particles. In another example, an image processed by the image processing system is used to evaluate the shape of primary particles forming the aggregate particles. Such evaluation may be performed by the image processing system or by a computer system different from the image processing system. To "evaluate the shape" refers to a process that includes at least a calculation of a value related to shape.

"Aggregate particles" refers to particles formed by aggregation of multiple primary particles. "Primary particle" refers to a particle that cannot be broken down into smaller units. That is, a primary particle refers to the smallest unit of a particle. As an example, aggregate particles are formed from multiple carbon black particles and are used as conductive agents in lithium-ion batteries. In this example, the smaller the particle size of the carbon black is, the more parallel circuits are formed by the carbon black and therefore, even a small amount of carbon black can form many conductive paths. That is, in this example, a user can understand the performance of aggregate particles as a conductive agent by evaluating the particle size of the carbon black using the image processing system. As an example, the particle size of this carbon black is approximately 22 to 26 nm.

To evaluate the shape of a primary particle, the computer system may calculate a shape parameter related to the primary particle based on a shape parameter related to the aggregate particles. Examples of shape parameters for aggregate particles include area, perimeter, convex hull perimeter, convex hull area, length, width, equivalent circular diameter, circularity, area circularity, envelopment, area inside an envelope line, area envelope, aspect ratio (the ratio of the minimum Feret diameter to the maximum Feret diameter), and elongation, etc. As an example, the shape parameter of a primary particle is the average primary particle size, etc., of the primary particle. The computer system may evaluate the number of primary particles contained in the aggregate particle, the morphology of the aggregate particle, the electron microscope surface area, the fractal dimension of the entire aggregate particle, etc. As described above, the image processing system may perform such calculations and evaluations.

An original image is obtained by imaging using imaging devices such as a scanning electron microscope (SEM), a transmission electron microscope (TEM), etc. As an example, when using an SEM, an original image showing aggregate particles is obtained by the following procedure. First, a user prepares a sample by dispersing a plurality of aggregate particles in a solvent such as chloroform. Next, the user dispenses the prepared sample onto a substrate and allows it to dry. Then, by imaging the aggregate particles on the substrate using an imaging device, an original image showing the aggregate particles is obtained. By using an SEM, occurrence of unevenness in the background region of the original image is suppressed.

### [System Configuration]

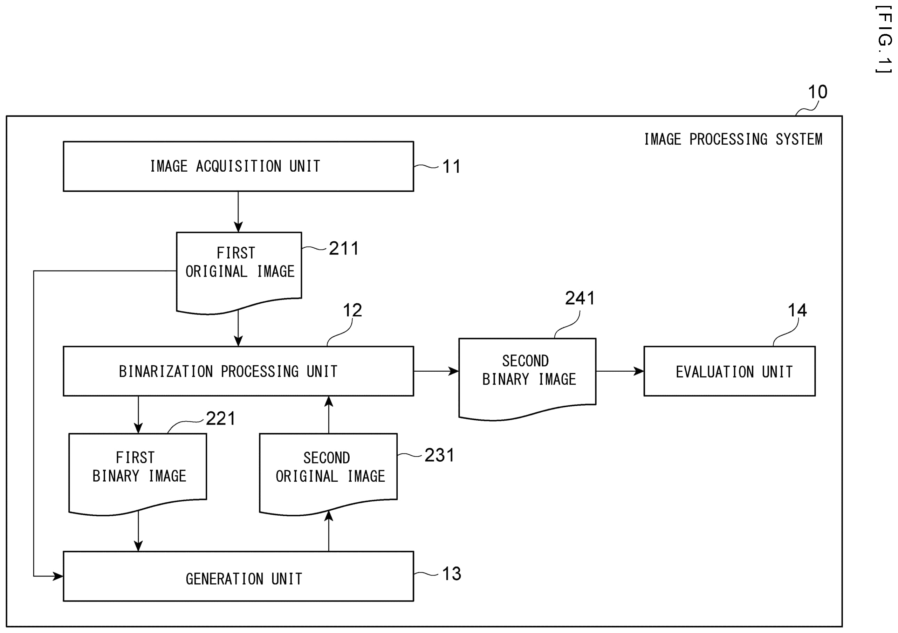

Fig. 1 shows an example of a functional configuration of an image processing system 10. The image processing system 10 includes, as functional elements, an image acquisition unit 11, a binarization processing unit 12, a generation unit 13, and an evaluation unit 14.

The image acquisition unit 11 is a functional module that obtains a first original image 211 obtained by an imaging device. The first original image 211 depicts a plurality of aggregate particles.

The binarization processing unit 12 is a functional module that performs binarization processing on the first original image 211 and a second original image 231. Binarization processing refers to converting the pixel value of each pixel in an image into a binary value. By performing binarization processing on an original image, a binary image is generated in which a foreground region formed from aggregate particles is distinguished from a background region other than the foreground region. The binarization processing unit 12 performs binarization processing on the first original image 211 to generate a first binary image 221, and performs binarization processing on the second original image 231 to generate a second binary image 241.

The generation unit 13 is a functional module that generates one or more second original images 231 based on the first original image 211 and the first binary image 221.

Each of the second original images 231 depicts a subset of the plurality of aggregate particles in the first original image 211. The pixel value of each pixel in the second original image 231 is the pixel value of each pixel in the first original image 211 corresponding to the each pixel in the second original image 231.

The evaluation unit 14 is a functional module that evaluates a shape of an aggregate particle or a primary particle. The evaluation unit 14 obtains the second binary image 241 and calculates the shape parameters of an arbitrary aggregate particle. Then, based on the calculated shape parameters, the evaluation unit 14 may evaluate a shape of primary particles that form the aggregate particle.

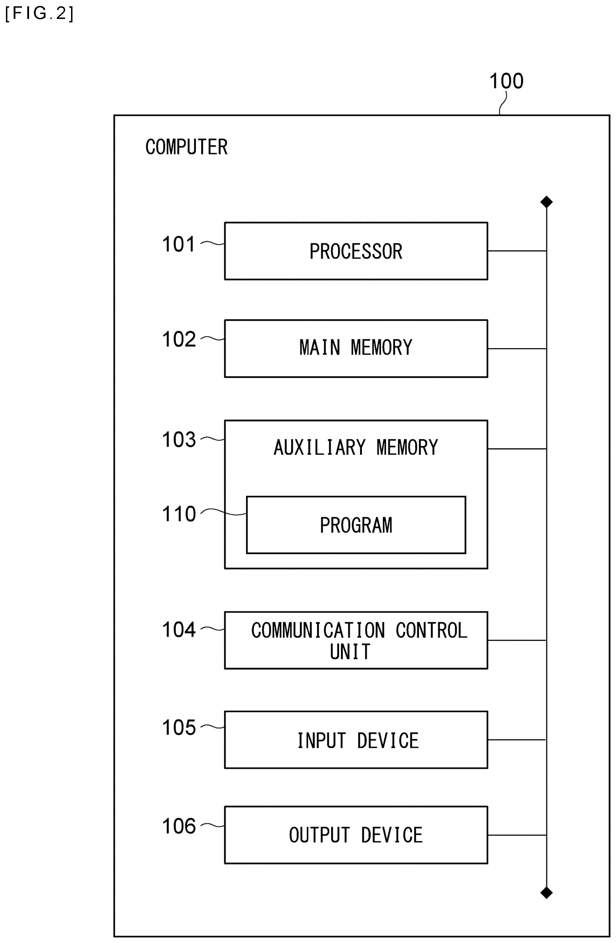

Fig. 2 is a diagram showing a general hardware configuration of a computer 100 that can function as an image processing system 10. For example, the computer 100 includes a processor 101, a main memory 102, an auxiliary memory 103, a communication control unit 104, an input device 105, and an output device 106. The processor 101 executes an operating system and application programs. The main memory 102 is, for example, composed of ROM and RAM. The auxiliary memory 103 is, for example, composed of a hard disk or flash memory, and generally stores a larger amount of data than the main memory 102. The auxiliary memory 103 non-temporarily stores a program 110 for causing at least one computer to function as the image processing system 10. The communication control unit 104 is composed of, for example, a network card or a wireless communication module. The input device 105 is composed of, for example, a keyboard, a mouse, a touch panel, etc. The output device 106 is composed of, for example, a monitor and speakers.

Each functional module of the image processing system 10 is implemented by loading the program 110 into the processor 101 or the main memory 102 and causing the processor 101 to execute the program 110. The program 110 contains code for implementing each functional element of the image processing system 10. The processor 101 operates the communication control unit 104, the input device 105, or the output device 106 in accordance with the program 110, and performs reading and writing of data from/to the main memory 102 or the auxiliary memory 103. Through this processing, each functional element of the image processing system 10 is implemented. Data or databases required for processing may be stored in the main memory 102 or the auxiliary memory 103.

The program 110 corresponds to an image processing program. The program 110 may be provided after being non-temporarily recorded on a tangible recording medium, such as a CD-ROM, DVD-ROM, or semiconductor memory. Alternatively, the program 110 may be provided via a communication network as a data signal superimposed on a carrier wave.

The image processing system 10 may be configured using one or more computers. When multiple computers are used, the image processing system 10 is configured by connecting these computers to each other via a communication network.

### [Images]

This section describes various images processed by the image processing system 10. The resolutions of the first binary image 221, the second original image 231, and the second binary image 241 are the same as that of the first original image 211.

The second original image 231 depicts a subset of the plurality of aggregate particles in the first original image 211. In other words, the second original image 231 can be said to be an image that captures a portion of the field of view of the first original image 211. Each second original image 231 may depict a single aggregate particle or two or more aggregate particles. Assuming that the first original image 211 depicts N aggregate particles, the generation unit 13 may generate multiple second original images 231 such that all of the N aggregate particles are depicted by one of the second original images 231. If each of the second original images 231 represents a single aggregate particle, N second original images 231 are generated. The generation unit 13 may generate a plurality of second original images 231 such that only some of the N aggregate particles are shown by one of the second original images 231. In this case, the remaining aggregate particles are not shown by any of the second original images 231.

In a pair of corresponding second original image 231 and second binary image 241, one or more aggregate particles shown in the images are the same.

### [System Operation]

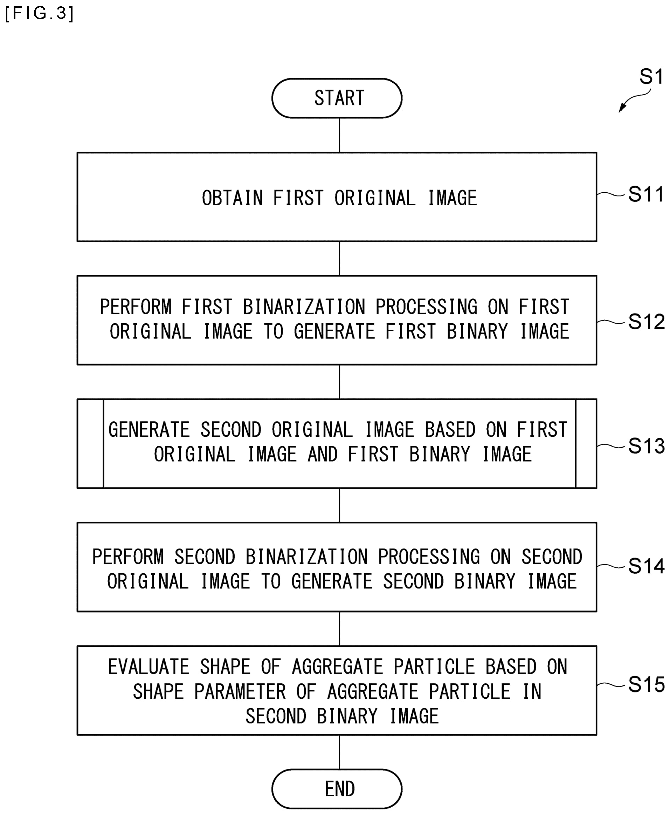

Referring to Fig. 3, the operation of the image processing system 10 will be described, along with an example of an image processing method. Fig. 3 is a flowchart showing an example of processing in the image processing system 10 as processing flow S1.

In step S11, the image acquisition unit 11 obtains a first original image 211. The image acquisition unit 11 may receive a first original image 211 from an imaging device or another computer. Alternatively, the image acquisition unit 11 may access a given database or file system to read the first original image 211. Alternatively, the image acquisition unit 11 may obtain a first original image 211 input by a user of the image processing system 10. The obtained first original image 211 is a grayscale image. In a grayscale image, the pixel value of each pixel is an integer value between 0 (corresponding to black) and 255 (corresponding to white). The image acquisition unit 11 may obtain the first original image 211 by converting a color image into a grayscale image. In one example, the image acquisition unit 11 obtains an SEM image captured by a scanning electron microscopy. Since SEM images can be obtained with high contrast, they are suitable for binarization processing.

As an example, the resolution of a first original image 211 is 2.48 [nm/pixel]. The resolution of a first original image 211 may be 1.00 to 5.00 [nm/pixel] or 1.50 to 3.00 [nm/pixel]. As an example, a first original image 211 may be an image captured at a magnification of 20,000 times.

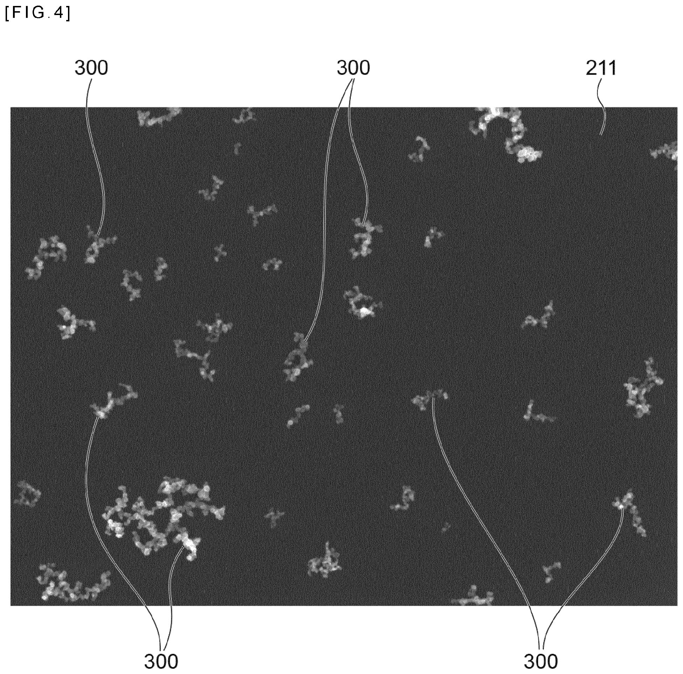

Fig. 4 shows an example of a first original image 211.

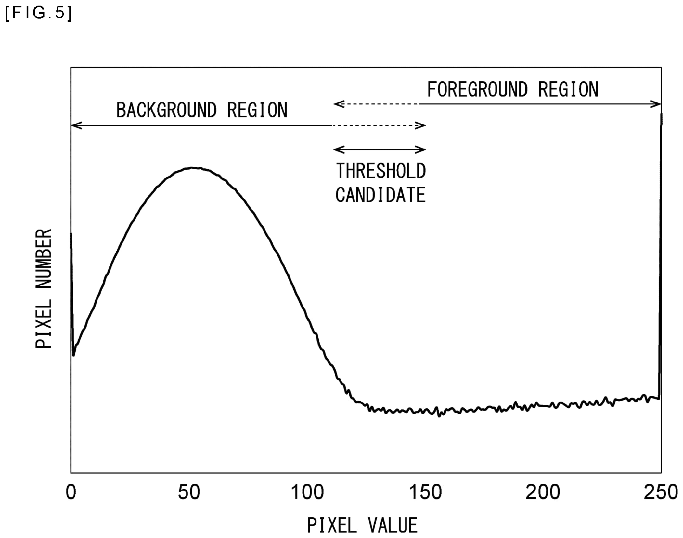

Returning to Fig. 3, in step S12, the binarization processing unit 12 performs a first binarization processing on the first original image to generate a first binary image in which a foreground region formed from a plurality of aggregate particles is distinguished from a background region other than the foreground region. The binarization processing unit 12 performs a first binarization processing on the first original image 211 to generate a first binary image 221. As an example, the first binarization processing is a process based on a Gaussian mixture model. The details of the Gaussian mixture model will be explained with reference to Fig. 5. Fig. 5 shows an example of a histogram of pixel values in a first original image 211.

As shown in Fig. 5, in a first original image, which is a grayscale image, a histogram in each of a foreground region and a background region forms a peaked distribution. In Fig. 5, the histogram in the background region is shown as a tail portion of the peaked distribution. A Gaussian mixture model assumes that each peak-like distribution follows a Gaussian distribution and calculates an occurrence frequency F(xi) of each pixel value xᵢ (i = 0 to 255) as a weighted linear sum of a plurality of Gaussian distributions. Here, x₀ to x₂₅₅ correspond to grayscale pixel values 0 to 255, respectively. The binarization processing unit 12 calculates the occurrence frequency F(xᵢ) based on the Gaussian mixture model using the following equation (1). Here, the Gaussian distributions are denoted by f₁(xᵢ) and f₂(xᵢ). f₁(xᵢ) corresponds to a Gaussian distribution in the foreground region, and f₂(xᵢ) corresponds to a Gaussian distribution in the background region. The mean of f₁(xᵢ) is µ₁, and the variance of f₁(xᵢ) is *σ*₁²*.* The mean of f₂(xᵢ) is µ₂, and the variance of f₂(xᵢ) is σ₂². Further, a weight of f₁(xᵢ)is w₁, and a weight of f₂(xᵢ) is w₂. Each of w₁, w₂ is a real number of 0 or more, and a sum of w₁ and w₂ is 1.

[Math. 1] $F \left({x}_{i}\right) = {w}_{1} {f}_{1} \left({x}_{i}\right) + {w}_{2} {f}_{2} \left({x}_{i}\right)$ (1) where ${f}_{1} \left({x}_{i}\right) = \frac{1}{\sqrt{2 π} {σ}_{1}} exp \left(-\frac{{\left({x}_{i}-{μ}_{1}\right)}^{2}}{2 {σ}_{1}^{2}}\right) ,$ ${f}_{2} \left({x}_{i}\right) = \frac{1}{\sqrt{2 π} {σ}_{2}} exp \left(-\frac{{\left({x}_{i}-{μ}_{2}\right)}^{2}}{2 {σ}_{2}^{2}}\right)$

Then the binarization processing unit 12 converts each pixel value into a binary value based on a certain threshold T. As an example, the binarization processing unit 12 converts each pixel value into either 0 or 255 based on the threshold T. As an example, the binarization processing unit 12 calculates the threshold T as follows. First, the binarization processing unit 12 calculates a log-likelihood InL for the above equation (1) using the following equation (2).

[Math. 2] $lnL = {\sum }_{i = 0}^{255} lnF \left({x}_{i}\right)$ (2)

The binarization processing unit 12 then estimates values of parameters w₁, w₂, µ₁, σ₁, µ₂, and σ₂ that maximize the log-likelihood InL shown in the above equation (2), based on an EM algorithm (expectation-maximization algorithm), etc. The binarization processing unit 12 calculates the threshold T based on the estimated parameters. As an example, the binarization processing unit 12 calculates, as the threshold T, a pixel value at an intersection of two Gaussian distributions f₁(xᵢ) and f₂(xᵢ). Alternatively, the binarization processing unit 12 calculates, as the threshold T, an average value of µ₁ and µ₂. The binarization processing unit 12 then performs the first binarization processing by converting a pixel value less than the calculated threshold T into 0 and by converting a pixel value equal to or greater than the threshold T into 255. In a grayscale image, each distribution forming the histogram of pixel values follows a Gaussian distribution or has a shape close to a Gaussian distribution. Therefore, when a first original image is a grayscale image, particularly an SEM image, the binarization processing unit 12 can generate a first binary image with higher accuracy based on the Gaussian mixture model.

Alternatively, the first binarization processing may be based on Otsu's binarization method. Otsu's binarization method refers to processing in which a histogram is divided into two classes, a separability between the two classes is calculated, and a pixel value that maximizes the separability is calculated as a threshold T. Alternatively, the first binarization processing may be processing for performing binarization based on a threshold T input by a user.

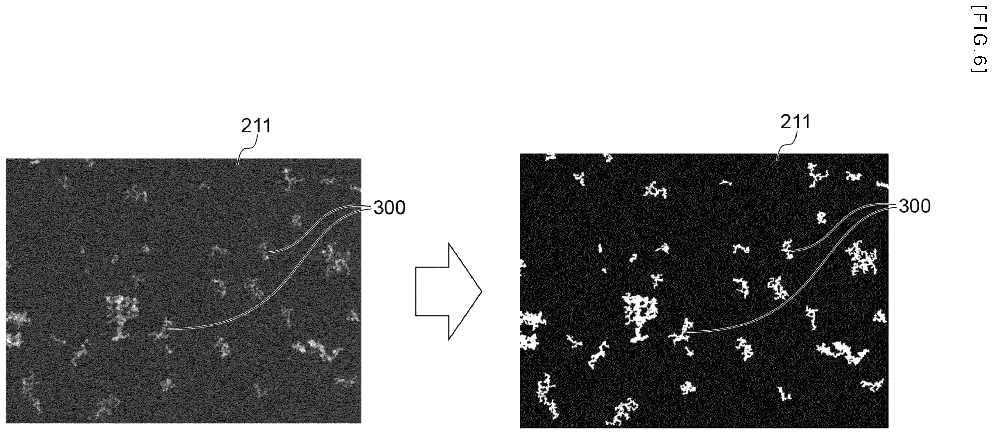

Fig. 6 shows an example of a first binarization processing performed by the binarization processing unit 12. The first original image 211 shown in this example is a grayscale SEM image. The first binary image 221 is an image after a first binarization processing has been performed, and the pixel value of each pixel in the first binary image 221 is either 0 or 255. In the first binary image 221, the shape of each aggregate particle 300 can be distinguished more clearly than in the first original image 211.

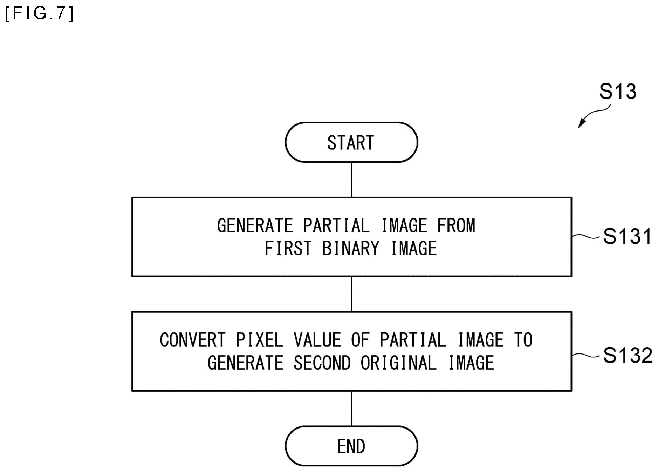

Returning to Fig. 3, in step S13, the generation unit 13 generates one or more second original images based on the first original image and the first binary image. The generation unit 13 generates one or more second original images 231 based on the first original image 211 and the first binary image 221. The details of step S13 will be explained with reference to Fig. 7. Fig. 7 is a flowchart showing an example method for generating a second original image.

In step S131, the generation unit 13 generates one or more partial images from a first binary image 221. Each partial image is a portion of a first binary image and represents a subset of a plurality of aggregate particles. The generation unit 13 may generate a partial image representing a single aggregate particle for the first binary image 221, or may generate a partial image representing two or more aggregate particles. As an example, the generation unit 13 may generate multiple partial images representing a single aggregate particle for the first binary image 221. In this example, a number of partial images equal to the number of aggregate particles shown in the first binary image 221 are obtained from the first binary image 221. The generation unit 13 may determine a small aggregate particle as noise and may choose not to generate a partial image representing that aggregate particle.

In step S132, the generation unit 13 converts the pixel value of each pixel in one or more partial images to generate one or more second original images. For each of the one or more partial images obtained from the first binary image 221, the generation unit 13 converts the pixel value of each pixel in the partial image to the pixel value of the corresponding pixel in the first original image 211 to generate a second original image 231. The pixel value of each pixel in the second original image is the pixel value of each pixel in the first original image corresponding to the each pixel in the second original image. A second original image is generated from a partial image. Therefore, a second original image represents a subset of a plurality of aggregate particles. For example, each of the second original images represents a single aggregate particle.

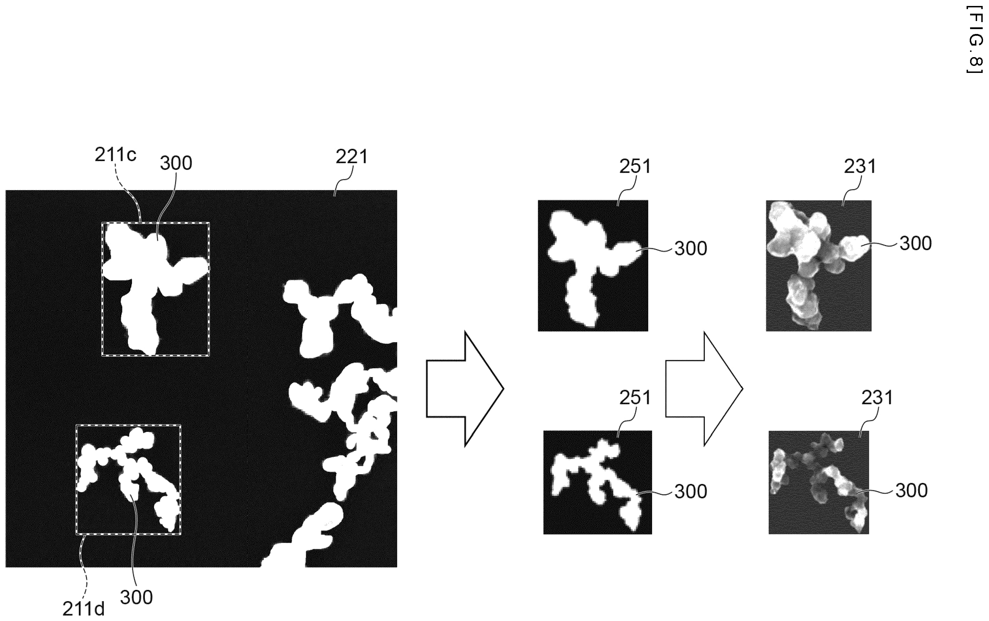

Fig. 8 shows an example of a method for generating a second original image with a part of the first binary image 221 enlarged. In this example, the generation unit 13 shows two partial images 251 and two second original images 231, each corresponding to subregions 211c and 211d of the first binary image 221.

Alternatively, in step S13, for the first original image 211, the generation unit 13 may directly generate one or more second original images from the first original image 211. In this case, first, the generation unit 13 refers to the first original image and the first binary image to identify a region in the first original image corresponding to a region in the first binary image that depicts a subset of an aggregate particle. Then, the generation unit 13 cuts out the identified region from the first original image to generate a second original image 231. In this way, the generation unit 13 can generate one or more second original images from the first original image without going through the generation of a partial image.

Returning to Fig. 3, in step S14, the binarization processing unit 12 performs a second binarization processing on each of one or more second original images to generate one or more second binary images in which a foreground region formed from aggregate particles is distinguished from a background region other than the foreground region. By the second binarization processing, the binarization processing unit 12 generates one or more second binary images 241 from one or more second original images 231. The second binarization processing may be based on a Gaussian mixture model as with the first binarization processing, or may be based on Otsu's binarization method. Alternatively, the second binarization processing may be processing for performing binarization based on a threshold T input by a user. The binarization method used for the second binarization processing may be the same as or different from that used for the first binarization processing.

Even if the same binarization is adopted in both the first binarization processing and the second binarization processing, the results of the first binarization processing and the second binarization processing for a given aggregate particle may differ from one another. This is because histograms of pixel values for a first original image and a second original image may differ from one another. A first original image 211 depicts a relatively large number of aggregate particles, and the range or distribution of pixel values may differ between individual aggregate particles. On the other hand, a second original image depicts a subset of aggregate particles. Consequently, the histogram of pixel values for the entire image differs between a first original image and a second original image. Due to such differences in histograms, thresholds T used in the binarization processing also differ. Therefore, the results of a first binarization processing and a second binarization processing for a given aggregate particle may differ from one another.

In step S15, the evaluation unit 14 evaluates a shape of at least one aggregate particle among the aggregate particles depicted in one or more second binary images 241. For example, the evaluation unit 14 evaluates, for each aggregate particle, the minimum Feret diameter (µm), maximum Feret diameter (µm), projected area (µm²), perimeter (µm), and area inside an envelope line (µm²) of the aggregate particle.

The evaluation unit 14 outputs evaluation results. The evaluation unit 14 may display the processing results on a display device, store the processing results in a predetermined storage device such as memory or a database, or transmit the processing results to another computer system.

The evaluation unit 14 may calculate as a shape parameter the perimeter of each aggregate particle in the subset of aggregate particles. For each subset of aggregate particles, the evaluation unit 14 may calculate the average primary particle size of the plurality of primary particles forming the aggregate particle based on the perimeter thereof. As an example, the evaluation unit 14 calculates the average particle size of the plurality of primary particles forming the aggregate particles based on the area of the aggregate particle and the perimeter of the aggregate particle. As an example, the evaluation unit 14 calculates the average particle size of the primary particles in accordance with the ASTM D3849 standard. In this example, the evaluation unit 14 calculates the average particle size of the primary particles using equation (3) below. The evaluation unit 14 may also calculate the number of primary particles forming a single aggregate particle using equation (4) below. In equations (3) and (4), P represents the perimeter of an aggregate particle and A represents the area of the aggregate particle. α represents an aggregation factor, dp represents the average particle size of the primary particles, and n represents the number of primary particles. If the calculated value of α is less than 0.4, the evaluation unit 14 sets the value of α to 0.4.

[Math. 3] $dp = \frac{απA}{P}$ (3) where $α = 13.092 {\left(\frac{{P}^{2}}{A}\right)}^{- 0.92}$

[Math. 4] $n = 16 \frac{{A}^{2}}{{\left(dp\right)}^{3} Pπ}$ (4)

The evaluation unit 14 may perform the above processing for each of two or more shape parameters.

### [Variations]

The present disclosure has been described in detail based on various examples. However, the present disclosure is not limited to the above examples. Various modifications to the present disclosure are possible without departing from the scope of the present disclosure.

The processing steps of the method executed by at least one processor are not limited to the examples described above. For example, some of the steps described above may be omitted, or the steps may be executed in a different order. Furthermore, any two or more of the steps described above may be combined, or some of the steps may be modified or deleted. Alternatively, other steps may be executed in addition to the steps described above.

In comparing the relative magnitudes of two numerical values in the present disclosure, either of the two criteria "or more" and "greater than" may be used, and either of the two criteria "or less" and "less than" may be used.

In the present disclosure, the expression "at least one processor executes the first process, executes the second process, executes the Lth process," or any corresponding expression, denotes a concept that includes cases where the entity (that is, a processor) executing the L processes from the first to Lth changes during the execution. That is, this expression denotes a concept that includes both cases where all L processes are executed by the same processor and cases where the processor changes according to an arbitrary policy among the L processes.

### [Additional Clauses]

As can be understood from the various examples above, the image processing system of the present disclosure includes the modes described below. Further, the method according to the present disclosure may include the image processing method described below. Further, the image processing system of the present disclosure may be executed by the image processing program described below.

### (Clause 1)

An image processing system comprising at least one processor, wherein the at least one processor:
obtains a first original image depicting a plurality of aggregate particles, each formed by aggregation of a plurality of primary particles;
performs a first binarization processing on the first original image to generate a first binary image in which a foreground region formed from the plurality of aggregate particles is distinguished from a background region other than the foreground region;
generates, based on the first original image and the first binary image, a second original image depicting a subset of the plurality of aggregate particles, in which a pixel value of each pixel in the second original image is a pixel value of each pixel in the first original image corresponding to the each pixel in the second original image; and
performs a second binarization processing on the second original image to generate a second binary image in which a foreground region formed from the subset of aggregate particles is distinguished from a background region other than the foreground region.

### (Clause 2)

The image processing system according to Clause 1, wherein the first original image is a grayscale image, and wherein the at least one processor:
performs the first binarization processing based on a Gaussian mixture model; and
performs a second binarization processing based on the Gaussian mixture model.

### (Clause 3)

The image processing system according to Clause 1 or 2, wherein the at least one processor:
generates, from the first binary image, a partial image that is a part of the first binary image and that depicts the subset of the plurality of aggregate particles; and
converts a pixel value of each pixel in the partial image to a pixel value of each pixel in the first original image corresponding to the each pixel in the partial image to generate the second original image.

### (Clause 4)

The image processing system according to any one of Clauses 1 to 3, wherein the at least one processor generates the second original image depicting one of the plurality of aggregate particles as the subset of aggregate particles.

### (Clause 5)

The image processing system according to any one of Clauses 1 to 4, wherein, for each of the subset of aggregate particles in the second binary image, the at least one processor calculates an average size of the plurality of primary particles forming the aggregate particles based on a perimeter of the aggregate particle.

### (Clause 6)

The image processing system according to any one of Clauses 1 to 5, wherein the first original image is an image obtained by imaging with a scanning electron microscope.

### (Clause 7)

An image processing method performed by an image processing system including at least one processor, the method including the steps of:
obtaining a first original image depicting a plurality of aggregate particles, each of the plurality of aggregate particles being formed by aggregation of a plurality of primary particles;
performing a first binarization processing on the first original image to generate a first binary image in which a foreground region formed from the plurality of aggregate particles is distinguished from a background region other than the foreground region;
generating, based on the first original image and the first binary image, a second original image depicting a subset of the plurality of aggregate particles, in which a pixel value of each pixel in the second original image is a pixel value of each pixel in the first original image corresponding to the each pixel in the second original image; and
performing a second binarization processing on the second original image to generate a second binary image in which a foreground region formed from the subset of aggregate particles is distinguished from a background region other than the foreground region.

### (Clause 8)

An image processing program that causes a computer to:
obtain a first original image depicting a plurality of aggregate particles, each of the plurality of aggregate particles being formed by aggregation of a plurality of primary particles;
perform a first binarization processing on the first original image to generate a first binary image in which a foreground region formed from the plurality of aggregate particles is distinguished from a background region other than the foreground region;
generate, based on the first original image and the first binary image, a second original image depicting a subset of the plurality of aggregate particles, in which a pixel value of each pixel in the second original image is a pixel value of each pixel in the first original image corresponding to the each pixel in the second original image; and
perform a second binarization processing on the second original image to generate a second binary image in which a foreground region formed from the subset of aggregate particles is distinguished from a background region other than the foreground region.

According to Clauses 1, 7, and 8, a first binary image depicting a plurality of aggregate particles is obtained by a first binarization processing. Then, based on the first original image and the first binary image, a second original image which depicts a subset of the plurality of aggregate particles is generated and in which a pixel value of each pixel is the pixel value of each pixel in the first original image. A second binarization processing is performed on the second original image to generate a second binary image for the subset of aggregate particles. In the first binarization processing, the appearance of different aggregated particles can influence one another, and this influence may be reflected in the first binary image. By performing a second binarization processing focusing on subset of aggregate particles, the influence of such appearance is suppressed, allowing for more accurate identification of the shapes of the aggregate particles. Using this second binary image enables evaluation of the shapes of aggregate particles and primary particles with high precision.

According to Clause 2, based on the first original image, which is a grayscale image, a second original image, which is also a grayscale image, is generated. By performing a first binarization processing based on a Gaussian mixture model on the grayscale first original image, a first binary image is generated in which a foreground region formed from a plurality of aggregate particles and a background region other than the foreground region are accurately distinguished. Using this first binary image, a second original image is generated based on an accurate identification of the subset of the plurality of aggregate particles. Then, by performing a second binarization processing based on a Gaussian mixture model on the grayscale second original image, a second binary image is generated in which a foreground region formed from the subset of aggregate particles and a background region other than the foreground region are more accurately distinguished. Using this second binary image enables evaluation of the shapes of aggregate particles and primary particles with higher precision.

According to Clause 3, the foreground region formed from a plurality of aggregate particles and the background region other than the foreground region are distinguished in the first binary image. Thus, a partial image can be easily generated from the first binary image. A second original image can be easily generated by converting the pixel value of each pixel in this partial image.

According to Clause 4, upon the second binarization processing, one aggregate particle does not affect the appearance of other aggregate particles. Therefore, the shape of the one aggregate particle can be determined with greater accuracy. As a result, the shape of a primary particle can be evaluated with higher precision.

According to Clause 5, based on the perimeter of the subset of aggregate particles of which the shape was accurately identified in the second binary image, the average size of the plurality of primary particles forming the subset of aggregate particles can be accurately calculated.

According to Clause 6, the first original image and the second original image each have high contrast. Thus, the first binary image and the second binary image can be generated in which the shape of the aggregate particle is even more accurately identified. As a result, the shape of a primary particle can be evaluated with higher precision.

The method according to the present disclosure may be a method for sorting carbon black suitable as a conductive material, or a method for sorting carbon black suitable as a conductive material for secondary batteries. Further, the method according to the present disclosure may be a method for evaluating the performance of carbon black as a conductive material, or a method for evaluating the performance of carbon black as a conductive material for secondary batteries.

Carbon black may be used as an electrode composition including, for example, carbon black and an active material capable of absorbing and releasing lithium ions.

As the active material in the electrode composition, known active materials may be used without particular limitation.

Examples of the active material include:
layered compounds such as lithium cobalt oxide (LiCoO₂), lithium nickel oxide (LiNiO₂), layered lithium manganese oxide (LiMnO₂), and composite oxides containing a plurality of transition metals, such as LiMnₓNi_{y}Co_{z}O₂ (x+y+z = 1, where 0 ≤ y < 1, 0 ≤ z < 1, 0 ≤ x < 1);
Manganese compounds such as Li₁₊ₓMn₂₋ₓO₄ (where x represents 0 to 0.33), Li₁₊ₓMn_{2-x-y}M_{y}O₄ (where M represents at least one metal selected from the group consisting of Ni, Co, Cr, Cu, Fe, Al, and Mg. X represents 0 to 0.33, y represents 0 to 1.0, and 2-x-y > 0), LiMnO₃, LiMn₂O₃, LiMnO₂, LiMn₂₋ₓMₓO₂ (where M represents at least one metal selected from the group consisting of Co, Ni, Fe, Cr, Zn, and Ta and x represents 0.01 to 0.1), Li₂Mn₃MO₈ (where M represents at least one metal selected from Co, Ni, Fe, Cr, and Zn);
copper-lithium oxide (Li₂CuO₂);
iron-lithium oxide (LiFe₃O₄);
olivine compounds such as LiFePO₄, LiMnPO₄, LiMnFePO₄, Li₂MPO₄F (where M represents at least one metal selected from the group consisting of Co, Ni, Fe, Cr, and Zn);
vanadium oxides such as LiV₃O₈, V₂O₅, and Cu₂V₂O₇;
disulfide compounds;
silicate compounds such as Li₂MSiO₄ (where M represents at least one metal selected from the group consisting of Co, Ni, Fe, Cr, Zn, and Ta);
Li₂MO₃·LiMO₂ (where M represents at least one metal selected from the group consisting of Mn, Co, Ni, Fe, Cr, and Zn), Fe₂(MoO₄)₃, Li₂S, S, etc.

The above electrode composition may be used, for example, as an electrode containing the above electrode composition, or as a secondary battery including such an electrode. Secondary batteries may include a positive electrode and/or a negative electrode that contains the above electrode composition, and it is preferable that the positive electrode contains the above electrode composition.

There are no particular limitations in electrodes without the above electrode composition or in components other than the electrodes in secondary batteries. Thus, known electrodes and components of secondary batteries may be used without particular limitation.

The above describes preferred embodiments of the present disclosure, but the present disclosure is not limited to the embodiments described above.

### EXAMPLES

The present disclosure will be described in further detail below with reference to the following examples. However, the present disclosure is not limited to these examples.

### (Test Examples 1 to 6)

### (1) Properties of carbon black

Measurements of oil absorption and BET specific surface area were performed on carbon blacks CB1 through CB6 using the method described below. Furthermore, the measurement binary images of carbon blacks CB1 to CB6 were obtained using the method described below. From the obtained measurement binary images, the proportions of the first, second, third, and fourth aggregate particles were calculated using the method described below. The results are shown in Table 1.

### (a) Measurement of oil absorption

The oil absorption of each carbon black was measured using DBP (dibutyl phthalate) as oil according to the method described in Method B of JIS K 6221. The obtained DBP absorption values were converted to values equivalent to JIS K 6217-4:2008 using equation (a) below. $DBP Absorption = \left(A-10.974\right) / 0.7833$ (a) [wherein A represents the DBP absorption value measured using the method described in Method B of JIS K 6221.]

### (b) Measurement of BET specific surface area

The BET specific surface area of each carbon black was measured using the BET single-point method in accordance with JIS K 6217-2 Method B, using nitrogen as an adsorbent gas under the condition of relative pressure p/p₀ = 0.30 ± 0.04.

### (c) Acquisition of measurement binary image

A measurement sample was obtained by dropping a dispersion of carbon black in chloroform onto a substrate and allowing it to dry. For the measurement sample, a grayscale SEM image (first original image) was obtained, and based on a Gaussian mixture model, binarization processing was performed to obtain the first binary image. From the first binary image, a partial image showing a subset of aggregate particles was generated. The pixel value of each pixel in the partial image was converted to a pixel value of each pixel in the first original image corresponding to the each pixel in the partial image to generate a second original image. Binarization processing based on a Gaussian mixture model was performed on the second original image to obtain the measurement binary image.

### (d) Classification of aggregate particles

From the measurement binary image generated in (c) above, the minimum Feret diameter a (µm), maximum Feret diameter b (µm), the projected area A (µm²), the perimeter P (µm), and the area inside an envelope line Ac (µm²) were determined. From the X, Y, and Z values from equations (i) to (iii), the aggregate particles were classified into one of the following categories: a first aggregate particle, a second aggregate particle, a third aggregate particle, or a fourth aggregate particle. For 2,000 randomly selected aggregate particles, the above classification was performed, and the proportion of each aggregate particle was determined. The results are shown in Table 1.

### (2) Evaluation of carbon black

### (a) Preparation of positive electrode

Prepared were, as a solvent, N-methyl-2-pyrrolidone (manufactured by Kanto Chemical Co., Inc.: hereinafter referred to as NMP); as an active material, LiNi_{0.5}Mn_{0.3}Co_{0.2}O₂ (manufactured by Umicore SA, product name: TX10); as a binder, polyvinylidene fluoride (manufactured by Arkema S.A., product name: HSV900: hereinafter referred to as PVdF); as a conductive material, one of carbon blacks CB1 to CB6; and as a dispersant, polyvinyl alcohol (manufactured by Denka Company Limited, product name: B05; hereinafter referred to as polyvinyl alcohol). Weighing and mixing LiNi_{0.5}Mn_{0.3}Co_{0.2}O₂ 98 mass% on a solid basis, PVdF 2 mass% on a solid basis, carbon black 1 mass% on a solid basis, and polyvinyl alcohol 0.1 mass% on a solid basis. NMP was then added to this mixture to achieve a solid content of 68 mass%, and the mixture was mixed using a rotation-revolution planetary mixer (Awatori Rentaro ARV-310, manufactured by Thinky Corp.) until homogeneous, yielding a dispersion for an electrode composition (positive electrode composition). The prepared dispersion of the electrode composition was coated onto a 15 µm thick aluminum foil (manufactured by UACJ) using an applicator, then left to stand in a dryer for one hour at 105°C for preliminary drying. Next, the film was pressed in a roll press at a line pressure of 200 kg/cm to prepare a film with a thickness of 80 µm, including the 15 µm thick aluminum foil. To remove volatile components, the film was vacuum-dried at 170°C for 3 hours to obtain a positive electrode.

### (b) Electrode Evaluation

The prepared positive electrode was cut into a 14 mm diameter disc, and with both sides contacted by the SUS304 flat-plate electrodes, AC impedance was measured using an electrochemical measurement system (Function Generator 1260 and Potentio/Galvanostat 1287 manufactured by Solartron) with an amplitude of 10 mV and a frequency range of 0.1 Hz to 1 MHz. The point of intersection with the x-axis on the Cole-Cole plot was taken as the resistance value. The results are shown in Table 1.

**[Table 1]**

| | | Example 1 | Example 2 | Example 3 | Example 4 | Example 5 | Example 6 |
|---|---|---|---|---|---|---|---|
| Oil absorption (mL/100g) | | 304 | 318 | 253 | 233 | 177 | 390 |
| BET specific surface area (m²/g) | | 210 | 376 | 138 | 63 | 38 | 877 |
| Proportion (%) | First aggregate particle | 41.6 | 39.8 | 48.1 | 41.2 | 42.4 | 42.0 |
| | Second aggregate particle | 0.0 | 0.0 | 0.1 | 0.0 | 0.0 | 0.0 |
| | Third aggregate particle | 5.8 | 10.4 | 1.1 | 14.1 | 16.3 | 17.8 |
| | Fourth aggregate particle | 52.6 | 49.8 | 50.7 | 44.7 | 41.4 | 40.2 |
| Resistance of electrode (Ω •cm²) | | 43 | 97 | 130 | 145 | 179 | 218 |

The results shown in Table 1 confirm that when aggregate particles are classified based on measurement binary images generated by the image processing system of the present disclosure, there is a negative correlation between the proportion of the fourth aggregate particle and the resistance value of the electrode. In particular, it was confirmed that electrodes with lower resistance values can be formed using carbon black in which the proportion of the fourth aggregate particle is 41% or more.

### REFERENCE SIGNS LIST

10: Image processing system
11: Image acquisition unit
12: Binarization processing unit
13: Generation unit
14: Evaluation unit
211: First original image
221: First binary image
231: Second original image
241: Second binary image
251: Partial image

## Claims

1. Carbon black comprising a plurality of aggregate particles, each of the plurality of aggregate particles being formed by aggregation of a plurality of primary particles, wherein
when the plurality of aggregate particles are classified into: a first aggregate particle having an X value determined by the following equation (i) of less than 0.588; a second aggregate particle having the X value of 0.588 or more and a Y value determined by the following equation (ii) of 0.833 or more; a third aggregate particle having the X value of 0.588 or more, the Y value of less than 0.833, and a Z value determined by the following equation (iii) of 0.77 or more; and a fourth aggregate particle having the X value of 0.588 or more, the Y value of less than 0.833, and the Z value of less than 0.77,
a proportion of the fourth aggregate particle relative to a total number of the first aggregate particle, the second aggregate particle, the third aggregate particle, and the fourth aggregate particle is 41% or more. $X = a / b$ (i) $Y = 4 π A / {P}^{2}$ (ii) $Z = A / Ac$ (iii)
[wherein a represents a minimum Feret diameter (µm) of the aggregate particle, b represents a maximum Feret diameter (µm) of the aggregate particle, A represents a projected area (µm²) of the aggregate particle, P represents a perimeter (µm) of the aggregate particle, and Ac represents an area (µm²) inside an envelope line of the aggregate particle, in a measurement binary image generated by an image processing system,
wherein the image processing system comprises at least one processor, and the at least one processor:
obtains a grayscale first original image depicting the plurality of aggregate particles captured by a scanning electron microscope;
performs a first binarization processing on the first original image based on a Gaussian mixture model to generate a first binary image in which a foreground region formed from the plurality of aggregate particles is distinguished from a background region other than the foreground region;
generates, from the first binary image, a partial image that is a part of the first binary image and that depicts a subset of the plurality of aggregate particles;
converts a pixel value of each pixel in the partial image to a pixel value of each pixel in the first original image corresponding to the each pixel in the partial image to generate a second original image; and
performs a second binarization processing on the second original image based on a Gaussian mixture model to generate the measurement binary image in which a foreground region formed from the subset of aggregate particles is distinguished from a background region other than the foreground region.]

2. The carbon black according to claim 1, wherein the proportion of the third aggregate particle relative to the total number of the first aggregate particle, the second aggregate particle, the third aggregate particle, and the fourth aggregate particle is 17% or less.

3. The carbon black according to claim 1, wherein the carbon black has an oil absorption of 150 mL/100g or more and 400 mL/100g or less.

4. The carbon black according to claim 1, wherein the carbon black has a BET specific surface area of 35 m²/g or more and 400 m²/g or less.

5. An electrode composition comprising the carbon black according to any one of claims 1 to 4 and an active material capable of absorbing and releasing lithium ions.

6. An electrode comprising the electrode composition according to claim 5.

7. A secondary battery comprising the electrode according to claim 6.

8. A method of evaluating or sorting carbon black comprising a plurality of aggregate particles, each of the plurality of aggregate particles being formed by aggregation of a plurality of primary particles, the method comprising steps of:
obtaining a measurement binary image generated by an image processing system;
determining, from the measurement binary image, a proportion of a fourth aggregate particle relative to a total number of a first aggregate particle, a second aggregate particle, a third aggregate particle, and the fourth aggregate particle,
when the plurality of aggregate particles are classified into: the first aggregate particle having an X value determined by the following equation (i) of less than 0.588; the second aggregate particle having the X value of 0.588 or more and a Y value determined by the following equation (ii) of 0.833 or more; the third aggregate particle having the X value of 0.588 or more, the Y value of less than 0.833, and a Z value determined by the following equation (iii) of 0.77 or more; and the fourth aggregate particle having the X value of 0.588 or more, the Y value of less than 0.833, and the Z value of less than 0.77; and
evaluating or sorting the carbon black based on the proportion,
wherein the image processing system comprises at least one processor, and the at least one processor:
obtains a first original image depicting the plurality of aggregate particles;
performs a first binarization processing on the first original image to generate a first binary image in which a foreground region formed from the plurality of aggregate particles is distinguished from a background region other than the foreground region;
generates, based on the first original image and the first binary image, a second original image depicting a subset of the plurality of aggregate particles, in which a pixel value of each pixel in the second original image is a pixel value of each pixel in the first original image corresponding to the each pixel in the second original image; and
performs a second binarization processing on the second original image to generate the measurement binary image in which a foreground region formed from the subset of aggregate particles is distinguished from a background region other than the foreground region. $X = a / b$ (i) $Y = 4 π A / {P}^{2}$ (ii) $Z = A / Ac$ (iii)
[wherein a represents a minimum Feret diameter (µm) of the aggregate particle, b represents a maximum Feret diameter (µm) of the aggregate particle, A represents a projected area (µm²) of the aggregate particle, P represents a perimeter (µm) of the aggregate particle, and Ac represents an area (µm²) inside an envelope line of the aggregate particle, in the measurement binary image generated by the image processing system.]

9. The method according to claim 8, wherein the first original image is a grayscale image, and wherein the at least one processor:
performs the first binarization processing based on a Gaussian mixture model; and
performs a second binarization processing based on the Gaussian mixture model.

10. The method according to claim 8 or 9, wherein the at least one processor:
generates, from the first binary image, a partial image that is a part of the first binary image and that depicts the subset of the plurality of aggregate particles; and
converts a pixel value of each pixel in the partial image to a pixel value of each pixel in the first original image corresponding to the each pixel in the partial image to generate the second original image.

11. The method according to claim 8 or 9, wherein the first original image is an image obtained by imaging with a scanning electron microscope.
